# EUROPEAN PATENT APPLICATION

(11) **EP 4 797 779 A1**
(43) Date of publication of application: **26.08.2026**
(21) Application number: 24887857.1
(22) Date of filing: 01.11.2024
(51) Int. Cl.: H04W 24/08, H04B 7/0413

(54) **CHANNEL INFORMATION ACQUISITION METHOD, APPARATUS AND SYSTEM, AND CHIP MODULE AND STORAGE MEDIUM**

(30) Priority: 10.11.2023 CN 202311494931
(71) Applicant: HUAWEI TECHNOLOGIES CO., LTD., Shenzhen, Guangdong 518129 (CN)
(72) Inventor: LI, Ting, Shenzhen, Guangdong 518129 (CN); WANG, Tengjiao, Shenzhen, Guangdong 518129 (CN); WANG, Xiaohan, Shenzhen, Guangdong 518129 (CN); YE, Chencheng, Shenzhen, Guangdong 518129 (CN); JIN, Huangping, Shenzhen, Guangdong 518129 (CN); ZHOU, Guohua, Shenzhen, Guangdong 518129 (CN)
(74) Representative: Grünecker Patent- und Rechtsanwälte PartG mbB
(86) International application number: PCT/CN2024/129196
(87) International publication number: WO 2025/098245

(57) **Abstract**

A channel information obtaining method, an apparatus, a system, a chip module, and a storage medium are provided. When there is an energy difference between ports of a communication apparatus, channel information associated with one port group is obtained based on a second reference signal. The communication apparatus then sends a first reference signal on two port groups, channel information associated with the other port group and channel combining information are obtained based on the first reference signal, and the channel information that is obtained based on the second reference signal and that is associated with one port group and the channel information that is obtained based on the first reference signal and that is associated with the other port group are combined based on the channel combining information, so that full channel information with high accuracy can be obtained, thereby improving accuracy of the obtained channel information.

## Description

### TECHNICAL FIELD

This application relates to the field of communication technologies, and in particular, to a channel information obtaining method, an apparatus, a system, a chip module, and a storage medium.

### BACKGROUND

In a time division duplex (time division duplex, TDD) communication system, downlink channel information may be obtained by using an uplink channel sounding signal (sounding reference signal, SRS), or the downlink channel information may be determined based on a precoding matrix indicator (precoding matrix indicator, PMI) (obtained by a terminal device by measuring a downlink reference signal sent by a network device) fed back by the terminal device.

However, for an antenna array including a plurality of antenna element radiation patterns with large differences or a distributed antenna array, if the downlink channel information is obtained by using the SRS, there is an energy difference between signals received by different antenna ports of an antenna array of the network device. For a terminal device with a low signal to interference plus noise ratio (signal to interference plus noise ratio, SINR), downlink channel information obtained by the network device for a part of antenna ports (ports that receive weak signal energy) is not accurate enough.

If downlink channel information corresponding to all antenna ports of the network device is determined based on PMIs fed back by the terminal device, PMI feedback overheads are high for an array plane with a large quantity of antenna ports. In addition, relatively accurate channel information can be obtained by performing SRS measurement on an antenna port that receives strong signal energy in the antenna array of the network device, and PMI feedback is not needed. This causes a waste of overheads.

In view of this, when there is an energy difference between antenna ports of the terminal device or the network device, how to improve accuracy of obtained channel information is a problem to be urgently resolved.

### SUMMARY

This application provides a channel information obtaining method, an apparatus, a system, a chip module, and a storage medium, to improve accuracy of obtained channel information when there is an energy difference between ports of a terminal device or a network device.

According to a first aspect, a channel information obtaining method is provided. The method may be implemented by a terminal device, or a chip or a circuit used in the terminal device.

The method includes: separately receiving a first reference signal from a first port group of a network device and a first reference signal from a second port group of the network device; and sending indication information to the network device, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with a third port group, the second channel information is obtained based on a second reference signal, and the second port group belongs to the third port group.

Alternatively, the method includes: sending a second reference signal to a network device; separately receiving a first reference signal from a first port group of the network device and a first reference signal from a second port group of the network device, where the second port group belongs to a third port group, and the first port group and the third port group are obtained through division based on the second reference signal; and sending indication information to the network device, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the third port group, and the second channel information is obtained based on the second reference signal.

According to the method, when there is a signal energy difference between ports of the network device, the terminal device sends the second reference signal to the network device on all antenna ports of an antenna array of the terminal device. The network device obtains channel information associated with one port group based on the second reference signal, and then sends the first reference signals on two port groups. The terminal device obtains, based on the first reference signal, channel information associated with the other port group and the channel combining information, and reports the channel information and the channel combining information to the network device. The network device combines, based on the channel combining information, the channel information that is obtained based on the second reference signal and that is associated with one port group and the channel information that is obtained based on the first reference signal and that is associated with the other port group, so that full channel information with high accuracy can be obtained, thereby improving accuracy of the obtained channel information.

In a possible implementation, the first channel information is obtained by normalizing and quantizing third channel information based on reference channel information, the third channel information is obtained based on the first reference signal, and the third channel information is associated with the first port group.

In this manner, by performing normalization and quantization on the third channel information, when the terminal device subsequently sends the first channel information to the network device, signaling overheads can be reduced.

In another possible implementation, the channel combining information is obtained based on fourth channel information and the reference channel information, and the fourth channel information is obtained by measuring the first reference signal on a first port in the second port group.

In this manner, the channel information associated with the first port group and the channel information associated with the third port group may be normalized and quantized by using a same normalization reference based on the channel combining information, and then combined, thereby improving accuracy of channel combination.

In still another possible implementation, the first port is a port with strongest signal strength in the second port group, or a port predefined in a protocol, or a port configured by the network device, or a port indicated by the terminal device.

In still another possible implementation, the channel combining information includes amplitude information and phase information, and the amplitude information and the phase information is obtained based on the fourth channel information and the reference channel information.

In still another possible implementation, energy strength of the first reference signal on the first port group is lower than energy strength of the first reference signal on the second port group.

In still another possible implementation, the first reference signal is a channel state information-reference signal, and the second reference signal is a sounding reference signal.

According to a second aspect, a channel information obtaining method is provided. The method may be implemented by a network device, or a chip or a circuit used in the network device.

The method includes: separately sending a first reference signal on a first port group and a first reference signal on a second port group; receiving indication information, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with a third port group, the second channel information is obtained based on a second reference signal, and the second port group belongs to the third port group; and combining the first channel information and the second channel information based on the channel combining information, to obtain downlink channel information.

Alternatively, the method includes: receiving a second reference signal, and obtaining second channel information based on the second reference signal, where the second channel information is associated with a third port group; separately sending a first reference signal on a first port group and a first reference signal on a second port group, where the second port group belongs to the third port group, and the first port group and the third port group are obtained through division based on the second reference signal; receiving indication information, where the indication information indicates first channel information and channel combining information that are obtained based on the first reference signal, the first channel information is associated with the first port group, the channel combining information is associated with the first port group and the second port group, and the channel combining information is used for combining the second channel information and the first channel information; and combining the first channel information and the second channel information based on the channel combining information, to obtain downlink channel information.

According to the method, when there is an energy difference between ports of the network device, after obtaining channel information associated with one port group based on the second reference signal, the network device sends the first reference signals on two port groups. A terminal device obtains, based on the first reference signal, channel information associated with the other port group and the channel combining information, and reports the channel information and the channel combining information to the network device. The network device combines, based on the channel combining information, the channel information that is obtained based on the second reference signal and that is associated with one port group and the channel information that is obtained based on the first reference signal and that is associated with the other port group, so that full channel information with high accuracy can be obtained, thereby improving accuracy of the obtained channel information.

In a possible implementation, the first channel information is obtained by normalizing and quantizing third channel information based on reference channel information, the third channel information is obtained based on the first reference signal, and the third channel information is associated with the first port group.

In this manner, by performing normalization and quantization on the third channel information, when the terminal device subsequently sends the first channel information to the network device, signaling overheads can be reduced.

In another possible implementation, the channel combining information is obtained based on fourth channel information and the reference channel information, and the fourth channel information is obtained by measuring the first reference signal on a first port in the second port group.

In this manner, performing normalization and quantization by using a same normalization reference can improve accuracy of channel combination.

In still another possible implementation, the first port is a port with strongest signal strength in the second port group, or a port predefined in a protocol, or a configured port.

In still another possible implementation, the channel combining information includes amplitude information and phase information, and the amplitude information and the phase information is obtained based on the fourth channel information and the reference channel information.

In still another possible implementation, the combining the first channel information and the second channel information based on the channel combining information, to obtain the downlink channel information includes: performing normalization processing on the second channel information based on channel information that corresponds to the first port in the second port group and that is in the second channel information, to obtain sixth channel information; processing the sixth channel information based on the channel combining information, to obtain seventh channel information; and combining the first channel information and the seventh channel information, to obtain the downlink channel information.

In still another possible implementation, energy strength of the first reference signal on the first port group is lower than energy strength of the first reference signal on the second port group.

In still another possible implementation, the first reference signal is a channel state information-reference signal, and the second reference signal is a sounding reference signal.

According to a third aspect, a channel information obtaining method is provided. The method may be implemented by a terminal device, or a chip or a circuit used in the terminal device.

The method includes: receiving a first reference signal from a network device on a first port group and a second port group; and sending indication information to the network device, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on a second reference signal.

Alternatively, the method includes: sending a second reference signal to a network device; receiving a first reference signal from the network device on a first port group and a second port group, where the first port group and the second port group are obtained based on the second reference signal; and sending indication information to the network device, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on the second reference signal.

According to the method, when there is an energy difference between ports of the terminal device, the network device obtains channel information associated with one port group of the terminal device based on the second reference signal, and then sends the first reference signal to two port groups of the terminal device. The terminal device obtains, based on the first reference signal, channel information associated with the other port group and the channel combining information, and reports the channel information and the channel combining information to the network device. The network device combines, based on the channel combining information, the channel information that is obtained based on the second reference signal and that is associated with one port group and the channel information that is obtained based on the first reference signal and that is associated with the other port group, so that full channel information with high accuracy can be obtained, thereby improving accuracy of the obtained channel information.

In still another possible implementation, the first channel information is obtained by normalizing and quantizing third channel information based on reference channel information, the third channel information is obtained based on the first reference signal, and the third channel information is associated with the first port group.

In this manner, by performing normalization and quantization on the third channel information, when the terminal device subsequently sends the first channel information to the network device, signaling overheads can be reduced.

In another possible implementation, the channel combining information is obtained based on fourth channel information and the reference channel information, and the fourth channel information is obtained by measuring the first reference signal on a first port in the second port group.

In this manner, the channel information associated with the first port group and the channel information associated with a third port group may be normalized and quantized by using a same normalization reference based on the channel combining information, and then combined, thereby improving accuracy of channel combination.

In still another possible implementation, the first port is a port with strongest signal strength in the second port group, or a port predefined in a protocol, or a port configured by the network device, or a port indicated by the terminal device.

In still another possible implementation, the channel combining information includes amplitude information and phase information, and the amplitude information and the phase information is obtained based on the fourth channel information and the reference channel information.

In still another possible implementation, energy strength of the first reference signal on the first port group is lower than energy strength of the first reference signal on the second port group.

In still another possible implementation, the first reference signal is a channel state information-reference signal, and the second reference signal is a sounding reference signal.

According to a fourth aspect, a channel information obtaining method is provided. The method may be implemented by a network device, or a chip or a circuit used in the network device.

The method includes: sending a first reference signal to a first port group and a second port group of a terminal device; receiving indication information from the terminal device, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on a second reference signal; and combining the second channel information and the first channel information based on the channel combining information, to obtain downlink channel information.

Alternatively, the method includes: receiving a second reference signal from a terminal device, and obtaining second channel information based on the second reference signal; sending a first reference signal to a first port group and a second port group of the terminal device, where the first port group and the second port group are obtained through division based on the second reference signal; receiving indication information from the terminal device, where the indication information indicates first channel information and channel combining information that are obtained based on the first reference signal, the first channel information is associated with the first port group, the channel combining information is associated with the first port group and the second port group, the channel combining information is used for combining the second channel information and the first channel information, and the second channel information is associated with the second port group; and combining the second channel information and the first channel information based on the channel combining information, to obtain downlink channel information.

According to the method, when there is an energy difference between ports of the terminal device, the network device obtains channel information associated with one port group of the terminal device based on the second reference signal, and then sends the first reference signal to two port groups of the terminal device. The terminal device obtains, based on the first reference signal, channel information associated with the other port group and the channel combining information, and reports the channel information and the channel combining information to the network device. The network device combines, based on the channel combining information, the channel information that is obtained based on the second reference signal and that is associated with one port group and the channel information that is obtained based on the first reference signal and that is associated with the other port group, so that full channel information with high accuracy can be obtained, thereby improving accuracy of the obtained channel information.

In a possible implementation, the first channel information is obtained by normalizing and quantizing third channel information based on reference channel information, the third channel information is obtained based on the first reference signal, and the third channel information is associated with the first port group.

In this manner, by performing normalization and quantization on the third channel information, when the terminal device subsequently sends the first channel information to the network device, signaling overheads can be reduced.

In another possible implementation, the channel combining information is obtained based on fourth channel information and the reference channel information, and the fourth channel information is obtained by measuring the first reference signal on a first port in the second port group.

In this manner, the channel information associated with the first port group and the channel information associated with the second port group may be normalized and quantized by using a same normalization reference based on the channel combining information, thereby improving accuracy of channel combination.

In still another possible implementation, the first port is a port with strongest signal strength in the second port group, or a port predefined in a protocol, or a port configured by the network device, or a port indicated by the terminal device.

In still another possible implementation, the channel combining information includes amplitude information and phase information, and the amplitude information and the phase information is obtained based on the fourth channel information and the reference channel information.

In still another possible implementation, the combining the second channel information and the first channel information based on the channel combining information, to obtain the downlink channel information includes: performing normalization processing on the second channel information based on channel information that corresponds to the first port in the second port group and that is in the second channel information, to obtain sixth channel information; processing the sixth channel information based on the channel combining information, to obtain seventh channel information; and combining the first channel information and the seventh channel information, to obtain the downlink channel information.

In still another possible implementation, energy strength of the first reference signal on the first port group is lower than energy strength of the first reference signal on the second port group.

In still another possible implementation, the first reference signal is a channel state information-reference signal, and the second reference signal is a sounding reference signal.

According to a fifth aspect, a channel information obtaining apparatus is provided. The channel information obtaining apparatus may implement the method according to any one of the first aspect or the implementations of the first aspect. For example, the channel information obtaining apparatus may be a chip or a terminal device. The foregoing method may be implemented by software, hardware, or hardware executing corresponding software.

In a possible implementation, the apparatus includes a transceiver unit and a processing unit. The transceiver unit is configured to separately receive a first reference signal from a first port group of a network device and a first reference signal from a second port group of the network device. The processing unit is configured to generate indication information, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with a third port group, the second channel information is obtained based on a second reference signal, and the second port group belongs to the third port group. The transceiver unit is configured to send the indication information to the network device.

Alternatively, the transceiver unit is configured to send a second reference signal to a network device. The transceiver unit is further configured to separately receive a first reference signal from a first port group of the network device and a first reference signal from a second port group of the network device, where the second port group belongs to a third port group, and the first port group and the third port group are obtained through division based on the second reference signal. The processing unit is configured to generate indication information, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the third port group, and the second channel information is obtained based on the second reference signal. The transceiver unit is further configured to send the indication information to the network device.

For further features and beneficial effects, refer to related descriptions in the first aspect.

According to a sixth aspect, a channel information obtaining apparatus is provided. The channel information obtaining apparatus may implement the method according to any one of the second aspect or the implementations of the second aspect. For example, the channel information obtaining apparatus may be a chip or a terminal device. The foregoing method may be implemented by software, hardware, or hardware executing corresponding software.

In a possible implementation, the apparatus includes a transceiver unit and a processing unit. The transceiver unit is configured to separately send a first reference signal on a first port group and a first reference signal on a second port group. The transceiver unit is configured to receive indication information, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with a third port group, the second channel information is obtained based on a second reference signal, and the second port group belongs to the third port group. The processing unit is configured to combine the first channel information and the second channel information based on the channel combining information, to obtain downlink channel information.

Alternatively, the transceiver unit is configured to receive a second reference signal. The processing unit is configured to obtain second channel information based on the second reference signal, where the second channel information is associated with a third port group. The transceiver unit is further configured to separately send a first reference signal on a first port group and a first reference signal on a second port group, where the second port group belongs to the third port group, and the first port group and the third port group are obtained through division based on the second reference signal. The processing unit is further configured to generate indication information, where the indication information indicates first channel information and channel combining information that are obtained based on the first reference signal, the first channel information is associated with the first port group, the channel combining information is associated with the first port group and the second port group, and the channel combining information is used for combining the second channel information and the first channel information. The transceiver unit is further configured to receive the indication information. The processing unit is further configured to combine the first channel information and the second channel information based on the channel combining information, to obtain downlink channel information.

Optionally, the processing unit is further configured to perform normalization processing on the second channel information based on channel information that corresponds to a first port in the second port group and that is in the second channel information, to obtain sixth channel information. The processing unit is further configured to process the sixth channel information based on the channel combining information, to obtain seventh channel information. The processing unit is further configured to combine the first channel information and the seventh channel information, to obtain the downlink channel information.

For further features and beneficial effects, refer to related descriptions in the second aspect.

According to a seventh aspect, a channel information obtaining apparatus is provided. The channel information obtaining apparatus may implement the method according to any one of the third aspect or the implementations of the third aspect. For example, the channel information obtaining apparatus may be a chip or a terminal device. The foregoing method may be implemented by software, hardware, or hardware executing corresponding software.

In a possible implementation, the apparatus includes a transceiver unit and a processing unit. The transceiver unit is configured to receive a first reference signal from a network device on a first port group and a second port group. The processing unit is configured to: generate indication information, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on a second reference signal; and send the indication information to the network device.

Alternatively, the transceiver unit is configured to send a second reference signal to a network device. The transceiver unit is further configured to receive a first reference signal from the network device on a first port group and a second port group, where the first port group and the second port group are obtained based on the second reference signal. The processing unit is configured to generate indication information, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on the second reference signal. The transceiver unit is further configured to send the indication information to the network device.

For further features and beneficial effects, refer to related descriptions in the third aspect.

According to an eighth aspect, a channel information obtaining apparatus is provided. The channel information obtaining apparatus may implement the method according to any one of the fourth aspect or the implementations of the fourth aspect. For example, the channel information obtaining apparatus may be a chip or a terminal device. The foregoing method may be implemented by software, hardware, or hardware executing corresponding software.

In a possible implementation, the apparatus includes a transceiver unit and a processing unit. The transceiver unit is configured to send a first reference signal to a first port group and a second port group of the terminal device. The transceiver unit is further configured to receive indication information from the terminal device, where the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on a second reference signal. The processing unit is configured to combine the second channel information and the first channel information based on the channel combining information, to obtain downlink channel information.

Alternatively, the transceiver unit is configured to receive a second reference signal from the terminal device. The processing unit is configured to obtain second channel information based on the second reference signal. The transceiver unit is further configured to send a first reference signal to a first port group and a second port group of the terminal device, where the first port group and the second port group are obtained through division based on the second reference signal. The transceiver unit is further configured to receive indication information from the terminal device, where the indication information indicates first channel information and channel combining information that are obtained based on the first reference signal, the first channel information is associated with the first port group, the channel combining information is associated with the first port group and the second port group, the channel combining information is used for combining the second channel information and the first channel information, and the second channel information is associated with the second port group. The processing unit is further configured to combine the second channel information and the first channel information based on the channel combining information, to obtain downlink channel information.

Optionally, the processing unit is further configured to perform normalization processing on the second channel information based on channel information that corresponds to a first port in the second port group and that is in the second channel information, to obtain sixth channel information. The processing unit is further configured to process the sixth channel information based on the channel combining information, to obtain seventh channel information. The processing unit is further configured to combine the first channel information and the seventh channel information, to obtain the downlink channel information.

For further features and beneficial effects, refer to related descriptions in the fourth aspect.

In another possible implementation, the channel information obtaining apparatus in the fifth aspect to the eighth aspect includes a processor coupled to a memory. The processor is configured to support the apparatus in performing a corresponding function in the foregoing channel information obtaining method. The memory is configured to be coupled to the processor, and stores a computer program (or computer-executable instructions) and/or data necessary for the apparatus. Optionally, the channel information obtaining apparatus may further include a communication interface, configured to support communication between the apparatus and another network element, for example, for data and/or signal sending or receiving. For example, the communication interface may be a transceiver, a circuit, a bus, a module, or another type of communication interface. Optionally, the memory may be located inside the channel information obtaining apparatus and integrated with the processor, or may be located outside the channel information obtaining apparatus.

In another possible implementation, the channel information obtaining apparatus in the fifth aspect to the eighth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to receive a signal from another channel information obtaining apparatus other than the channel information obtaining apparatus and transmit the signal to the processor, or send a signal from the processor to another channel information obtaining apparatus other than the channel information obtaining apparatus. When the channel information obtaining apparatus is a chip, the transceiver apparatus is a transceiver circuit or an input/output interface.

When the channel information obtaining apparatus in the fifth aspect to the eighth aspect is a chip, a sending unit may be an output unit, for example, an output circuit or a communication interface; and a receiving unit may be an input unit, for example, an input circuit or a communication interface. When the channel information obtaining apparatus is a terminal device, a sending unit may be a transmitter or a transmitter machine; and a receiving unit may be a receiver or a receiver machine.

According to a ninth aspect, a communication system is provided. The communication system includes the channel information obtaining apparatus according to any one of the fifth aspect or the implementations of the fifth aspect, and at least one channel information obtaining apparatus according to any one of the sixth aspect or the implementations of the sixth aspect.

According to a tenth aspect, a communication system is provided. The communication system includes the channel information obtaining apparatus according to any one of the seventh aspect or the implementations of the seventh aspect, and at least one channel information obtaining apparatus according to any one of the eighth aspect or the implementations of the eighth aspect.

According to an eleventh aspect, a computer-readable storage medium is provided, and stores a computer program or instructions. When the program or the instructions are executed by a processor, the method according to any one of the first aspect or the implementations of the first aspect is implemented, or the method according to any one of the second aspect or the implementations of the second aspect is implemented, or the method according to any one of the third aspect or the implementations of the third aspect is implemented, or the method according to any one of the fourth aspect or the implementations of the fourth aspect is implemented.

According to a twelfth aspect, a computer program product is provided. When the computer program product is executed on a compute device, the method according to any one of the first aspect or the implementations of the first aspect is implemented, or the method according to any one of the second aspect or the implementations of the second aspect is implemented, or the method according to any one of the third aspect or the implementations of the third aspect is implemented, or the method according to any one of the fourth aspect or the implementations of the fourth aspect is implemented.

### BRIEF DESCRIPTION OF DRAWINGS

FIG. 1 is a diagram of an architecture of a communication system 1000 to which an embodiment of this application is applied;
FIG. 2 is a diagram of a basic procedure of SRS estimation performed by a network device and a terminal device;
FIG. 3 is a diagram of a basic procedure of CSI estimation performed by a network device and a terminal device;
FIG. 4 is a schematic flowchart of a channel information obtaining method according to an embodiment of this application;
FIG. 5 is a diagram of obtaining channel information when there is an energy difference between ports of a network device according to an example of this application;
FIG. 6 is a schematic flowchart of another channel information obtaining method according to an embodiment of this application;
FIG. 7 is a diagram of obtaining channel information when there is an energy difference between ports of a terminal device according to an example of this application;
FIG. 8 is a diagram of a structure of a channel information obtaining apparatus according to an embodiment of this application; and
FIG. 9 is a diagram of a structure of another channel information obtaining apparatus according to an embodiment of this application.

### DESCRIPTION OF EMBODIMENTS

The following describes embodiments of this application with reference to the accompanying drawings in embodiments of this application.

The technical solutions provided in this application may be applied to various communication systems, for example, a 5th generation (5^{th}generation, 5G) communication system, a future evolved system, or a plurality of converged communication systems, or may be applied to an existing communication system. Application scenarios of the technical solutions provided in this application may include a plurality of types, for example, machine-to-machine (machine to machine, M2M), macro-micro communication, enhanced mobile broadband (enhanced mobile broadband, eMBB), ultra-reliable low-latency communication (ultra reliable& low latency communication, uRLLC), and massive IoT communication (massive machine type communication, mMTC). These scenarios may include but are not limited to a scenario of communication between terminal devices, a scenario of communication between network devices, a scenario of communication between a network device and a terminal device, and the like. The network devices include a network device and a core network device. An example in which the technical solutions are applied to the scenario of communication between the network device and the terminal device is used below for description.

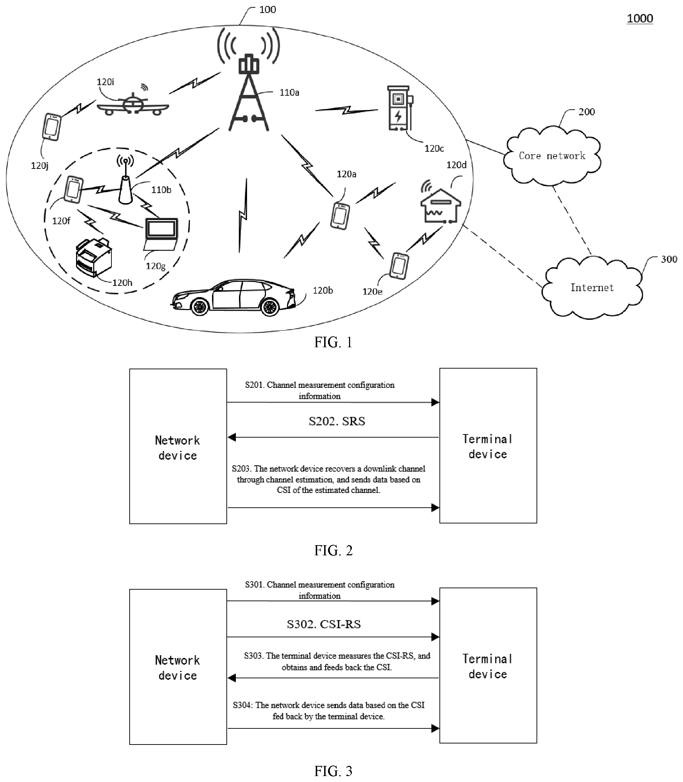

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless or wired manner. The core network device and the network device may be different physical devices that are independent of each other, functions of the core network device and logical functions of the network device may be integrated into a same physical device, or some functions of the core network device and some functions of the network device may be integrated into one physical device. Terminal devices may be connected to each other in a wired or wireless manner, and network devices may be connected to each other in a wired or wireless manner. FIG. 1 is merely a diagram. The communication system may further include other network devices, for example, may further include a wireless relay device and a wireless backhaul device, which are not shown in FIG. 1.

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that performs some functions of the network device, for example, may be a central unit (central unit, CU) or a distributed unit (distributed unit, DU). The network device may be a macro base station (for example, 110a in FIG. 1), may be a micro base station or an indoor base station (for example, 110b in FIG. 1), or may be a relay node, a donor node, or the like. A specific technology and a specific device form that are used for the network device are not limited in embodiments of this application.

The terminal device may also be referred to as a terminal, user equipment (user equipment, UE), a mobile station, a mobile terminal device, or the like. The terminal device may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used for the terminal device are not limited in embodiments of this application.

The network device and the terminal device may be at a fixed location, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device. That is, 110a and 120i communicate with each other by using a radio air interface protocol. Certainly, 110a and 120i may alternatively communicate with each other based on an interface protocol between network devices. In this case, for 110a, 120i is also a network device. Therefore, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as a smart grid, industrial control, smart transportation, and a smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When the terminal device communicates with the serving cell, the terminal device is further interfered by a signal from a neighboring cell.

A 5G communication system is used as an example. The 5G communication system has a higher requirement on a system capacity, spectral efficiency, and the like. In a 5G communication system, application of a massive multiple-input multiple-output (massive MIMO) technology plays an important role in improving spectral efficiency of the system. When a multiple-input multiple-output (multi-input multi-output, MIMO) technology is used, before sending data to the terminal device, the network device needs to precode the data. How to perform precoding needs to depend on channel state information (channel state information, CSI) fed back by the terminal device to the network device. Therefore, accurate CSI information is an important factor that affects system performance.

In a TDD system, because an uplink channel and a downlink channel use a same frequency band, there is reciprocity between uplink and downlink channels. A network device may obtain CSI of the downlink channel through uplink SRS channel estimation based on the reciprocity between the uplink and downlink channels, to perform precoding. FIG. 2 is a diagram of a basic procedure of SRS estimation performed by a network device and a terminal device. The procedure includes the following steps: S201. The network device sends configuration information for channel measurement to the terminal device, where the configuration information is used to notify the terminal device of time and behavior for SRS pilot measurement, that is, notify the terminal device of a resource on which the terminal device sends an SRS; S202. The terminal device sends the SRS to the network device based on the configuration information for channel estimation; and S203. The network device performs measurement based on the SRS sent by the terminal device, recovers a downlink channel through channel estimation, and sends data based on CSI obtained through channel estimation, where the network device determines, through channel estimation, precoding for transmitting data to the terminal device.

However, in a frequency division duplex (frequency division duplex, FDD) system, because an interval between uplink and downlink frequency bands is greater than a bandwidth, there is no complete reciprocity between uplink and downlink channels. In a conventional FDD system, the reciprocity between the uplink and downlink channels cannot be used, and the terminal device needs to feed back the CSI of the downlink channel to the network device. FIG. 3 is a diagram of a basic procedure of CSI estimation performed by a network device and a terminal device. The procedure includes the following steps: S301. The network device needs to first send configuration information for channel measurement to the terminal device, where the configuration information is used for channel measurement configuration, and notify the terminal device of time and behavior for channel measurement, that is, notify the terminal device of a resource on which the terminal device measures a channel state information-reference signal (channel state information-reference signal, CSI-RS); S302. The network device sends a CSI-RS to the terminal device for channel measurement; S303. The terminal device performs measurement based on the CSI-RS sent by the network device, calculates a final CSI feedback amount, and feeds back CSI to the network device; and S304. The network device sends data based on the CSI fed back by the terminal device, where the network device determines, based on a channel rank indicator (rank indicator, RI) fed back by the terminal device, a quantity of streams for transmitting data to the terminal device; the network device determines, based on a channel quality indicator (channel quality indicator, CQI) fed back by the terminal device, a modulation order for transmitting data to the terminal device and a channel coding rate; and the network device determines, based on a PMI fed back by the terminal device, precoding for transmitting data to the terminal device.

Therefore, channel information may be obtained in the following several implementations.

In a first implementation, a downlink precoding weight may be determined based on a channel estimation result obtained through SRS measurement and estimation.

In a second implementation, the downlink precoding weight may also be determined based on the PMI fed back by the terminal device.

In a third implementation, the network device in the TDD system may determine the downlink precoding weight based on an SRS channel estimation result, or may determine the downlink precoding weight based on the PMI fed back by the terminal device. For terminal devices with different SRS SINR values, an SRS/PMI weight switching solution may be considered. For a terminal device whose SRS SINR is greater than a specific threshold, the network device obtains the downlink precoding weight through SRS channel estimation. For a terminal device whose SRS SINR is less than a specific threshold, accuracy of SRS estimation is low, and channel estimation information is inaccurate. In this case, the network device may obtain the CSI of the downlink channel fed back by the terminal device, and determine the downlink precoding weight based on the fed back PMI information.

In an actual application, a new antenna unit design may be considered due to a limited antenna surface. A tri-polarized antenna array can be considered at both transmit and receive ends, so that ports can be extended on the limited antenna surface, and system performance can be improved. However, for the tri-polarized antenna array, there is a problem that signal energy corresponding to inter-polarized ports is different. A measurement signal of a third-polarized antenna port is weaker than a measurement signal of a conventional dual-polarized antenna port, an SINR corresponding to an SRS signal is lower, and accuracy of channel information corresponding to the third-polarized antenna port during SRS channel estimation is limited.

Both the network device and the terminal device may have a problem that signal energy between antenna ports is different.

In this background, if the downlink precoding weight is obtained through SRS channel estimation by using the first implementation, because an SNR corresponding to the third-polarized antenna port is low and the third-polarized channel measurement is inaccurate, low accuracy of a channel measurement result is caused.

If the second implementation or the third implementation is used, complete downlink channel information corresponding to all antenna ports needs to be fed back. For an antenna array including a large quantity of antenna ports, PMI feedback overheads are high.

This application provides a channel information obtaining solution to improve accuracy of obtained channel information when signal energy between ports of the network device or the terminal device is different. When signal energy between ports of a communication apparatus is different, channel information associated with one port group is obtained based on a second reference signal. The communication apparatus sends first reference signals on two port groups, obtains, based on the first reference signal, channel information associated with the other port group and channel combining information, and combines, based on the channel combining information, the channel information associated with one port group that is obtained based on the second reference signal and the channel information associated with the other port group that is obtained based on the first reference signal. In this way, complete channel information with high accuracy can be obtained, and accuracy of the obtained channel information can be improved.

The following describes in detail a channel information obtaining method provided in embodiments of this application with reference to the accompanying drawings.

In this application, "sending information to... (for example, a terminal device)" or a related description in the accompanying drawings may be understood as that a destination end of the information is the terminal device, and may include directly or indirectly sending the information to the terminal device. "Receiving information from... (for example, a terminal device)", "receiving information that is from... (a terminal device)", or a related description in the accompanying drawings may be understood as that a source end of the information is the terminal device, and may include directly or indirectly receiving the information from the terminal device. The information may undergo necessary processing, for example, a format change, between the source end and the destination end for information sending. However, the destination end may understand valid information from the source end. Similar expressions in this application may be understood similarly, and details are not described herein again.

The following describes in detail a channel state information feedback method provided in embodiments of this application. It may be understood that, in this application, an example in which a terminal device and a network device are used as execution entities of an interaction example is used for description. However, the execution entities of the interaction example are not limited in this application. For example, the terminal device in the method provided in this application may be a chip, a chip system, or a processor that is used in the terminal device, or may be a logical node, a logical module, or software that can implement all or a part of the terminal device. The network device in the method provided in this application may be a chip, a chip system, or a processor that is used in the network device, or may be a logical node, a logical module, or software that can implement all or a part of functions of the network device.

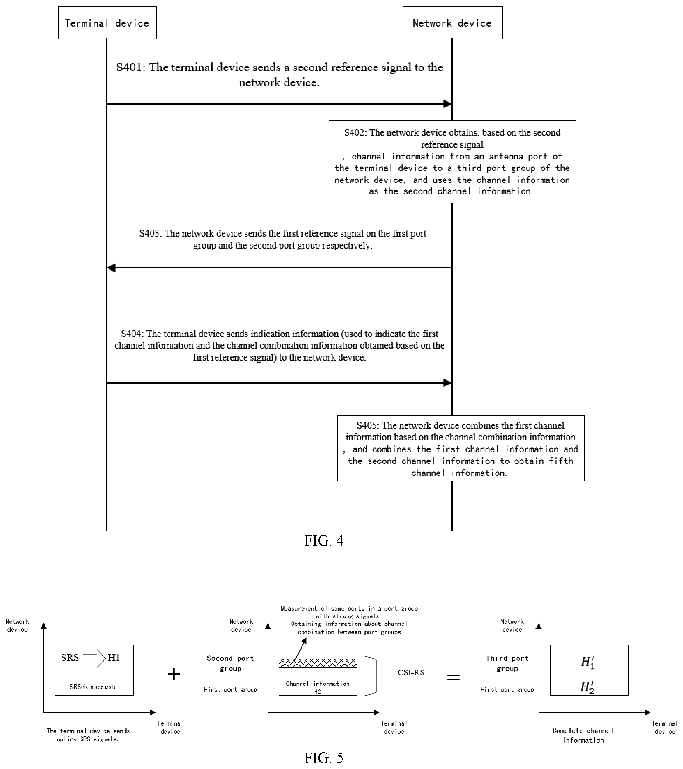

FIG. 4 is a schematic flowchart of a channel information obtaining method according to an embodiment of this application. For example, the method may include the following steps.

S401: A terminal device sends a second reference signal to a network device. Correspondingly, the network device receives the second reference signal.

The terminal device sends the second reference signal (for example, an SRS) to the network device, and the network device receives the second reference signal on all ports of an antenna array.

However, energy strength of second reference signals received on the ports of the antenna array of the network device are different. FIG. 5 is a diagram of obtaining channel information when there is an energy difference between ports of a network device according to an example of this application. The network device divides the ports of the network device into a first port group and a third port group based on the energy strength of the second reference signals received on the ports of the antenna array. Energy strength of the second reference signal on the first port group is lower than energy strength of the second reference signal on the third port group. Therefore, the first port group may be referred to as a weak port group, and the third port group may be referred to as a strong port group. Channel information obtained by the network device through estimation based on a measurement result of the second reference signal received from the first port group is inaccurate or of insufficient accuracy. For example, when the network device uses a tri-polarized antenna array, the first port group may be a third polarized port in the tri-polarized antenna array, and the third port group may be a cross-polarized port in the tri-polarized antenna array.

It may be understood that the foregoing step of port division is optional, and the first port group and the third port group of the foregoing network device may also be predefined in a protocol or preconfigured.

S402: The network device obtains, based on the second reference signal, channel information from an antenna port of the terminal device to the third port group of the network device as second channel information *H*₁.

S403: The network device separately sends a first reference signal on the first port group and a first reference signal on a second port group. Correspondingly, the terminal device separately receives the first reference signal from the first port group of the network device and the first reference signal from the second port group of the network device.

Still refer to FIG. 5. The network device is configured with two groups of ports: the first port group and the second port group. The first port group is used for associating a weak antenna port, and the second port group is used for associating a strong antenna port, and may include a part or all of ports of the third port group, that is, the second port group belongs to the third port group. For example, the second port group may include one or more ports.

The network device separately sends the first reference signal (for example, a CSI-RS) on the first port group and the first reference signal on the second port group. Correspondingly, the terminal device separately receives the first reference signal from the first port group of the network device and the first reference signal from the second port group of the network device.

It should be noted that one port group includes one or more ports, and the one or more ports are both transmit antenna ports and receive antenna ports.

S404: The terminal device sends indication information to the network device. Correspondingly, the network device receives the indication information.

After separately receiving the first reference signal from the first port group of the network device and the first reference signal from the second port group of the network device, the terminal device separately measures the first reference signal of the first port group of the network device and the first reference signal of the second port group of the network device. Energy strength of the first reference signal on the first port group is lower than energy strength of the first reference signal on the second port group.

The terminal device obtains third channel information *H*₂ based on a measurement result of the first reference signal received from the first port group of the network device. The third channel information is obtained based on the first reference signal, and is associated with the first port group.

Further, the terminal device performs normalization and quantization on the third channel information *H*₂*,* to obtain first channel information ${H}_{2}^{′}$*.* The first channel information is associated with the first port group. For example, ${H}_{2}^{′} = {H}_{2} / {ae}^{{jφ}_{2}}$*. ae*^{*jφ*₂} is a normalized reference, or is referred to as reference channel information with an amplitude of *a* and a phase of φ₂. The normalization reference is determined based on the third channel information *H*₂ obtained through actual measurement. For a specific determining method, refer to the conventional technology. By performing normalization and quantization on the third channel information *H*₂, when the terminal device subsequently sends the first channel information ${H}_{2}^{′}$ to the network device, feedback overheads can be reduced.

Based on a measurement result of the first reference signal received from the second port group of the network device, the terminal device selects a first port in the second port group, obtains channel information of the first port as fourth channel information with an amplitude of |hmax| and a phase of φ₁, and performs normalization and quantization on the fourth channel information by using the normalized reference *ae*^{*jφ*₂} that is the same as a normalized reference of channel information of the first port group, to obtain inter-port channel combining information $β = \frac{\left|{h}_{max}\right| {e}^{{jφ}_{1}}}{{ae}^{{jφ}_{2}}} = {γe}^{jθ}$, that is, the channel combining information is obtained based on the fourth channel information and the reference channel information. The channel combining information *β* has an amplitude of *γ* and a phase of *θ*. The channel combining information *β* is associated with the first port group and the second port group. The channel combining information *β* is used for combining the second channel information *H*₁ and the first channel information ${H}_{2}^{′}$. The first port is a port with strongest signal strength in the second port group, or a port predefined in a protocol, or a port configured by the network device, or a port indicated by the terminal device. Because the first channel information is obtained through feedback, the first channel information and the second channel information have different normalization references. Therefore, performing normalization and quantization by using a same normalization reference can improve accuracy of channel combination.

After obtaining the first channel information ${H}_{2}^{′}$ and the channel combining information *β*, the terminal device sends the indication information to the network device. The indication information indicates the first channel information ${H}_{2}^{′}$ and the channel combining information *β* that are obtained based on the first reference signal. For example, the indication information indicates the channel combining information *β*, and may include the amplitude *γ* and the phase *θ* of the channel combining information *β*.

S405: The network device combines the first channel information and the second channel information based on the channel combining information, to obtain fifth channel information.

After receiving the indication information, the network device combines the first channel information ${H}_{2}^{′}$ and the second channel information *H*₁ based on the channel combining information *β*, to obtain the fifth channel information.

For example, the foregoing combining process may include the following steps.
(1) The network device performs normalization processing on the second channel information based on the channel information that corresponds to the first port in the second port group and that is in the second channel information, to obtain sixth channel information. With reference to FIG. 5, the network device performs, based on the channel information that corresponds to the first port in the second port group and that is in the second channel information, normalization and quantization on the second channel information *H*₁ obtained in step S402, to obtain the sixth channel information ${{H}^{˜}}_{1} = \frac{{H}_{1}}{\left|{h}_{max}\right| {e}^{{jφ}_{1}}}$.
(2) Process the sixth channel information based on the channel combining information *β*, to obtain seventh channel information ${H}_{1}^{′} = {{H}^{˜}}_{1} ∗ β = \frac{{H}_{1}}{{ae}^{{jφ}_{2}}}$ obtained through amplitude and phase adjustment.
(3) Combine the first channel information ${H}_{2}^{′}$ and the seventh channel information ${H}_{1}^{′}$, to obtain the fifth channel information, that is, full channel information ${\left[{H}_{1}^{′}, {H}_{2}^{′}\right]}^{T}$, as shown in FIG. 5. The fifth channel information is also referred to as downlink channel information. In a TDD system, fifth information also corresponds to uplink channel information.

According to the channel information obtaining method provided in this embodiment of this application, when there is a signal energy difference between the ports of the network device, channel information associated with one port group is obtained based on the second reference signal, and then the first reference signals are sent on two port groups. The terminal device obtains, based on the first reference signal, channel information associated with the other port group and the channel combining information, and reports the channel information and the channel combining information to the network device. The network device combines, based on the channel combining information, the channel information that is obtained based on the second reference signal and that is associated with one port group and the channel information that is obtained based on the first reference signal and that is associated with the other port group, so that full channel information with high accuracy can be obtained, thereby improving accuracy of the obtained channel information.

According to descriptions of the foregoing embodiment, when there is the signal energy difference between the ports of the network device, the accuracy of the obtained channel information can be improved. The following embodiment describes how to improve the accuracy of the obtained channel information when there is a signal energy difference between ports of the terminal device.

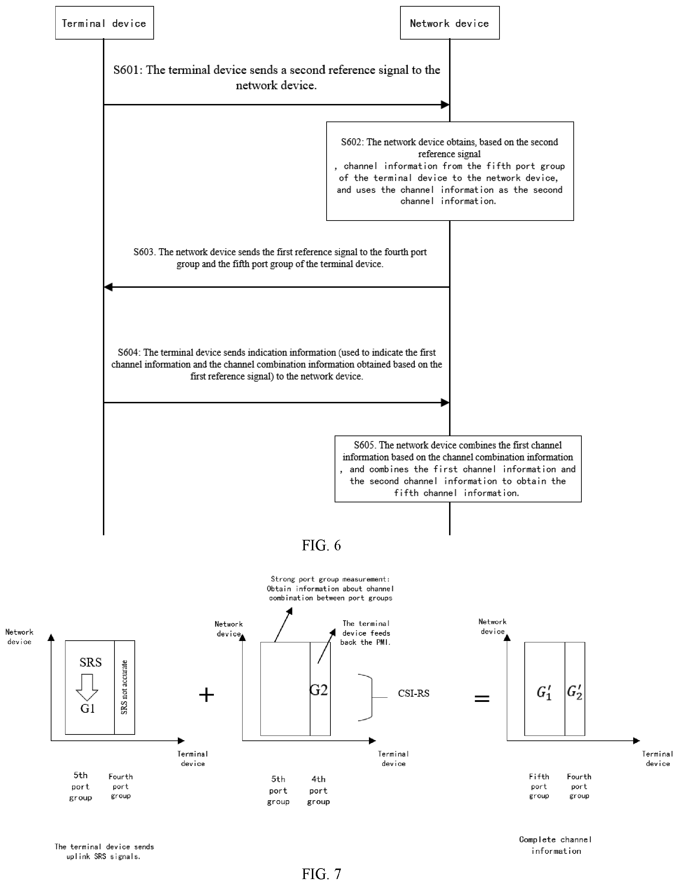

FIG. 6 is a schematic flowchart of another channel information obtaining method according to an embodiment of this application. For example, the method may include the following steps.

S601: A terminal device sends a second reference signal to a network device. Correspondingly, the network device receives the second reference signal.

The terminal device sends the second reference signal (for example, an SRS) to the network device, and the network device receives the second reference signal. The network device may detect an energy difference between second reference signals from ports of the terminal device, to divide the ports of the terminal device into a fourth port group and a fifth port group based on the energy difference of the ports of the terminal device. Optionally, the network device may indicate information about the fourth port group and the fifth port group of the terminal device to the terminal device.

In another alternative manner of dividing port groups, the network device sends a third reference signal (for example, a CSI-RS) to the terminal device, and the terminal device receives the third reference signal and performs measurement. The terminal device may divide the ports of the terminal device into the fourth port group and the fifth port group based on energy strength of third reference signals received on the ports of the terminal device. Energy strength of a reference signal on the fourth port group is lower than energy strength of a reference signal on the fifth port group. Therefore, the fourth port group may be referred to as a weak port group, and the fifth port group may be referred to as a strong port group. Channel information obtained by the terminal device through estimation based on a measurement result of a reference signal received from the network device on the fourth port group of the terminal device is inaccurate or of insufficient accuracy. For example, when the terminal device uses a tri-polarized antenna array, the fourth port group may be a third polarized port in the tri-polarized antenna array, and the fifth port group may be a cross-polarized port in the tri-polarized antenna array. Optionally, the terminal device may alternatively indicate the information about the fourth port group and the fifth port group of the terminal device to the network device.

It may be understood that foregoing division of the ports of the terminal device is optional. Alternatively, port groups of the terminal device may be configured by a network or predefined in a protocol.

S602: The network device obtains, based on the second reference signal, channel information from the fifth port group of the terminal device to the network device as second channel information.

Further, after receiving the second reference signal, the network device may alternatively obtain, based on the second reference signal and the foregoing division of the ports of the terminal device, the channel information from the fifth port group of the terminal device to the network device as the second channel information. FIG. 7 is a diagram of obtaining channel information when there is an energy difference between ports of a terminal device according to an example of this application. The network device may further obtain the channel information from the fifth port group of the terminal device to the network device as the second channel information *G*₁.

S603: The network device sends a first reference signal to the fourth port group and the fifth port group of the terminal device. Correspondingly, the terminal device receives the first reference signal from the network device on the fourth port group and on the fifth port group.

Still refer to FIG. 7. The network device sends the first reference signal (for example, the CSI-RS) to the terminal device. Correspondingly, the terminal device separately receives the first reference signal from the network device on the fourth port group and the fifth port group.

It should be noted that one port group includes one or more ports, and the one or more ports are both transmit antenna ports and receive antenna ports.

S604: The terminal device sends indication information to the network device. Correspondingly, the network device receives the indication information.

After separately receiving the first reference signal from the network device on the fourth port group and the fifth port group, the terminal device separately measures the first reference signal received on the fourth port group and the fifth port group. Energy strength of the first reference signal on the fourth port group is lower than energy strength of the first reference signal on the fifth port group.

The terminal device obtains third channel information *G*₂ based on a measurement result of the first reference signal that is received on the fourth port group and that is from the network device. The third channel information is obtained based on the first reference signal, and is associated with the fourth port group.

Further, the terminal device performs normalization and quantization on the third channel information *G*₂, to obtain first channel information ${G}_{2}^{′}$. The first channel information is associated with the fourth port group. For example, ${G}_{2}^{′} = {G}_{2} / {ρe}^{{jω}_{2}}$.*ρe*^{*jω*₂} is a normalized reference, or is referred to as reference channel information with an amplitude of *ρ* and a phase of ω₂. The normalization reference is determined based on the third channel information *G*₂ obtained through actual measurement. For a specific determining method, refer to the conventional technology. By performing normalization and quantization on the third channel information *G*₂, when the terminal device subsequently sends the first channel information ${G}_{2}^{′}$ to the network device, feedback overheads can be reduced.

Based on a measurement result of the first reference signal received on the fifth port group, the terminal device selects a first port in the fifth port group, obtains channel information of the first port as fourth channel information with an amplitude of |gmax| and a phase of ω₁, and performs normalization and quantization on the fourth channel information by using the normalization reference *ρe*^{*jω*₂} that is the same as a normalized reference of channel information of the fourth port group, to obtain inter-port channel combining information $δ = \frac{\left|{g}_{max}\right| {e}^{{jω}_{1}}}{{ρe}^{{jω}_{2}}} = {re}^{jϕ}$, that is, the channel combining information is obtained based on the fourth channel information and the reference channel information. The channel combining information *δ* has an amplitude of *ρ* and a phase of ω₂. The channel combining information *δ* is associated with the fourth port group and the fifth port group. The channel combining information *δ* is used for combining the second channel information *G*₁ and the first channel information ${G}_{2}^{′}$. The first port is a port with strongest signal strength in the fifth port group, or a port predefined in a protocol, or a configured port. Because the first channel information is obtained through feedback, the first channel information and the second channel information have different normalization references. Therefore, performing normalization and quantization by using a same normalization reference can improve accuracy of channel combination.

After obtaining the first channel information ${G}_{2}^{′}$ and the channel combining information *δ*, the terminal device sends the indication information to the network device. The indication information indicates the first channel information ${G}_{2}^{′}$ and the channel combining information *δ* that are obtained based on the first reference signal. For example, the indication information indicates the channel combining information *δ*, and may include the amplitude *r* and the phase *ϕ* of the channel combining information *δ*.

S605: The network device combines the first channel information and the second channel information based on the channel combining information, to obtain fifth channel information.

After receiving the indication information, the network device combines the first channel information ${G}_{2}^{′}$ and the second channel information *G*₁ based on the channel combining information *δ*, to obtain the fifth channel information.

For example, the foregoing combining process may include the following steps.
(1) The network device performs normalization processing on the second channel information based on the channel information that corresponds to the first port in the fifth port group and that is in the second channel information, to obtain sixth channel information. With reference to FIG. 7, the network device performs, based on the channel information corresponding to the first port in the fifth port group in the second channel information, normalization and quantization on the second channel information *G*₁ obtained in step S602, to obtain the sixth channel information ${{G}^{˜}}_{1} = \frac{{G}_{1}}{\left|{g}_{max}\right| {e}^{{jφ}_{1}}}$.
(2) Process the sixth channel information based on the channel combining information *δ*, to obtain seventh channel information ${G}_{1}^{′} = {{G}^{˜}}_{1} ∗ δ = \frac{{G}_{1}}{{ρe}^{{jω}_{2}}}$ obtained through amplitude and phase adjustment.
(3) Combine the first channel information ${G}_{2}^{′}$ and the seventh channel information ${G}_{1}^{′}$, to obtain the fifth channel information, that is, full channel information ${\left[{G}_{1}^{′}, {G}_{2}^{′}\right]}^{T}$, as shown in FIG. 7. The fifth channel information is also referred to as downlink channel information. In a TDD system, fifth information also corresponds to uplink channel information.

According to the channel information obtaining method provided in this embodiment of this application, when there is the signal energy difference between the ports of the terminal device, the network device obtains, based on the second reference signal, channel information associated with one port group of the terminal device, and then sends the first reference signal to two port groups of the terminal device. The terminal device obtains, based on the first reference signal, channel information associated with the other port group and the channel combining information, and reports the channel information and the channel combining information to the network device. The network device combines, based on the channel combining information, the channel information that is obtained based on the second reference signal and that is associated with one port group and the channel information that is obtained based on the first reference signal and that is associated with the other port group, so that full channel information with high accuracy can be obtained, thereby improving accuracy of the obtained channel information.

It may be understood that, to implement functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

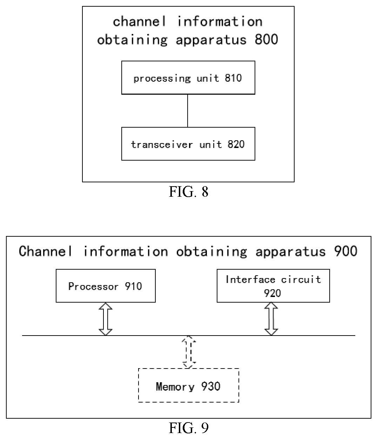

FIG. 8 and FIG. 9 are diagrams of structures of possible channel information obtaining apparatuses according to embodiments of this application. The channel information obtaining apparatuses may be configured to implement functions of the terminal device or the network device in the foregoing method embodiments. Therefore, beneficial effects of the foregoing method embodiments can also be implemented. In embodiments of this application, the channel information obtaining apparatus may be one of the terminal devices 120a to 120j shown in FIG. 1, or may be the network device 110a or 110b shown in FIG. 1, or may be a module (for example, a chip) used in the terminal device or the network device.

As shown in FIG. 8, a channel information obtaining apparatus 800 includes a processing unit 810 and a transceiver unit 820. The channel information obtaining apparatus 800 is configured to implement functions of the terminal device or the network device in the method embodiments shown in FIG. 4 or FIG. 6.

When the channel information obtaining apparatus 800 is configured to implement the functions of the terminal device in the method embodiments shown in FIG. 4 or FIG. 6, the transceiver unit 820 is configured to implement functions of the terminal device in steps S401, S403, and S404 in the embodiment shown in FIG. 4, or the transceiver unit 820 is configured to implement functions of the terminal device in steps S601, S603, and S604 in the embodiment shown in FIG. 6.

When the channel information obtaining apparatus 800 is configured to implement the functions of the network device in the method embodiments shown in FIG. 4 or FIG. 6, the transceiver unit 820 is configured to implement functions of the network device in steps S401, S403, and S404 in the embodiment shown in FIG. 4, and the processing unit 810 is configured to implement steps S402 and S405 in the embodiment shown in FIG. 4. Alternatively, the transceiver unit 820 is configured to implement functions of the network device in steps S601, S603, and S604 in the embodiment shown in FIG. 6, and the processing unit 810 is configured to implement steps S602 and S605 in the embodiment shown in FIG. 6.

For more detailed descriptions about the processing unit 810 and the transceiver unit 820, directly refer to related descriptions in the method embodiments shown in FIG. 4 or FIG. 6. Details are not described herein again.

When the channel information obtaining apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the channel information obtaining apparatus is a chip used in a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

As shown in FIG. 9, a channel information obtaining apparatus 900 includes a processor 910, and may further include an interface circuit 920. The processor 910 and the interface circuit 920 are coupled to each other. It may be understood that the interface circuit 920 may be a transceiver or an input/output interface. Optionally, the channel information obtaining apparatus 900 may further include a memory 930 (represented by a dashed line in the figure), configured to: store instructions executed by the processor 910, store input data needed by the processor 910 to run instructions, or store data generated after the processor 910 runs the instructions.

When the channel information obtaining apparatus 900 is configured to implement functions of the terminal device in the method embodiments shown in FIG. 4 or FIG. 6, the interface circuit 920 is configured to implement functions of the terminal device in steps S401, S403, and S404 in the embodiment shown in FIG. 4, or the interface circuit 920 is configured to implement functions of the terminal device in steps S601, S603, and S604 in the embodiment shown in FIG. 6.

When the channel information obtaining apparatus 900 is configured to implement functions of the network device in the method embodiments shown in FIG. 4 or FIG. 6, the interface circuit 920 is configured to implement functions of the network device in steps S401, S403, and S404 in the embodiment shown in FIG. 4, and the processor 910 is configured to implement steps S402 and S405 in the embodiment shown in FIG. 4. Alternatively, the interface circuit 920 is configured to implement functions of the network device in steps S601, S603, and S604 in the embodiment shown in FIG. 6, and the processor 910 is configured to implement steps S602 and S605 in the embodiment shown in FIG. 6.

For more detailed descriptions about the processor 910 and the interface circuit 920, directly refer to related descriptions in the method embodiments shown in FIG. 4 or FIG. 6. Details are not described herein again.

Division into the modules in this application is an example and is merely logical function division. There may be other division during actual implementation. In addition, functional modules in examples of this application may be integrated into one processor, each of the modules may exist alone physically, or two or more modules may be integrated into one module. The integrated module may be implemented in the form of hardware, or may be implemented in the form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is caused to perform the methods in the foregoing embodiments.

An embodiment of this application further provides a communication system, including the foregoing communication apparatus.

An embodiment of this application further provides a circuit. The circuit is coupled to a memory, and the circuit is configured to perform the methods shown in the foregoing embodiments. The circuit may include a chip circuit.

When the communication apparatus is a module used in a network device, the module in the network device implements functions of the network device in the foregoing method embodiments. The module in the network device receives information from another module (for example, a radio frequency module or an antenna) in the network device, where the information is sent by UE to the network device. Alternatively, the module in the network device sends information to another module (for example, a radio frequency module or an antenna) in the network device, where the information is sent by the network device to UE. The module in the network device herein may be a baseband chip of the network device, may be a CU, a DU, or another module, or may be an apparatus in an open radio access network (open radio access network, O-RAN) architecture, for example, an apparatus like an open CU or an open DU.

It should be noted that one or more of the foregoing units or units may be implemented by software, hardware, or a combination of software and hardware. When any one of the foregoing units or units is implemented by software, the software exists in the form of computer program instructions, and is stored in the memory. A processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, a discrete hardware component, or all or a part of circuits in the foregoing device that are configured to implement a processing function, and may implement or perform methods, steps, and logical block diagrams that are disclosed in this application. The general-purpose processor may be a microprocessor, any conventional processor, or the like. The steps of the methods disclosed with reference to this application may be directly performed and completed by a hardware processor, or may be performed and completed by a combination of hardware and a software module in the processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include a chip and another discrete device. This is not specifically limited in embodiments of this application.

The memory in this application may alternatively be a circuit or any other apparatus that can implement a storage function, and is configured to store program instructions and/or data. The memory is any other medium that can carry or store expected program code in the form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or the memory may be a volatile memory (volatile memory), for example, a random access memory (random-access memory, RAM).

It should be understood that unless otherwise specified, "/" in descriptions of this application indicates an "or" relationship between associated objects. For example, A/B may indicate A or B, where A and B may be singular or plural. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or a part of the foregoing embodiments may be implemented by using software, hardware, firmware, or any combination thereof. When a software program is used to implement the foregoing embodiments, all or a part of the foregoing embodiments may be implemented in the form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of descriptions, and are not used to limit the scope of embodiments of this application. Sequence numbers of the foregoing processes do not mean an execution sequence, and the execution sequence of the processes should be determined based on functions and internal logic of the processes.

In the foregoing embodiments, the descriptions of each embodiment have respective focuses. For a part that is not described in detail in an embodiment, refer to related descriptions in other embodiments.

Components in the apparatuses in embodiments of this application may be combined, divided, and deleted based on an actual requirement. A person skilled in the art may combine different embodiments or features of different embodiments described in this specification.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

## Claims

1. A channel information obtaining method, wherein the method comprises:
receiving a first reference signal from a first port group of a network device and a first reference signal from a second port group of the network device; and
sending indication information to the network device, wherein the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with a third port group, the second channel information is obtained based on a second reference signal, and the second port group belongs to the third port group.

2. The method according to claim 1, wherein the first channel information is obtained by normalizing and quantizing third channel information based on reference channel information, the third channel information is obtained based on the first reference signal, and the third channel information is associated with the first port group.

3. The method according to claim 2, wherein the channel combining information is obtained based on fourth channel information and the reference channel information, and the fourth channel information is obtained by measuring the first reference signal on a first port in the second port group.

4. The method according to claim 3, wherein the first port is a port with strongest signal strength in the second port group, or a port predefined in a protocol, or a port configured by the network device, or a port indicated by a terminal device.

5. The method according to claim 3 or 4, wherein the channel combining information comprises amplitude information and phase information, and the amplitude information and the phase information is obtained based on the fourth channel information and the reference channel information.

6. The method according to any one of claims 1 to 5, wherein energy strength of the first reference signal on the first port group is lower than energy strength of the first reference signal on the second port group.

7. The method according to any one of claims 1 to 6, wherein the first reference signal is a channel state information-reference signal CSI-RS, and the second reference signal is a sounding reference signal SRS.

8. A channel information obtaining method, wherein the method comprises:
sending a first reference signal on a first port group and a first reference signal on a second port group;
receiving indication information, wherein the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with a third port group, the second channel information is obtained based on a second reference signal, and the second port group belongs to the third port group; and
combining the first channel information and the second channel information based on the channel combining information, to obtain downlink channel information.

9. The method according to claim 8, wherein the first channel information is obtained by normalizing and quantizing third channel information based on reference channel information, the third channel information is obtained based on the first reference signal, and the third channel information is associated with the first port group.

10. The method according to claim 9, wherein the channel combining information is obtained based on fourth channel information and the reference channel information, and the fourth channel information is obtained by measuring the first reference signal on a first port in the second port group.

11. The method according to claim 10, wherein the first port is a port with strongest signal strength in the second port group, or a port predefined in a protocol, or a port configured by a network device, or a port indicated by a terminal device.

12. The method according to claim 10 or 11, wherein the channel combining information comprises amplitude information and phase information, and the amplitude information and the phase information is obtained based on the fourth channel information and the reference channel information.

13. The method according to any one of claims 10 to 12, wherein the combining the first channel information and the second channel information based on the channel combining information, to obtain the downlink channel information comprises:
performing normalization processing on the second channel information based on channel information that corresponds to the first port in the second port group and that is in the second channel information, to obtain sixth channel information;
processing the sixth channel information based on the channel combining information, to obtain seventh channel information; and
combining the first channel information and the seventh channel information, to obtain the downlink channel information.

14. The method according to any one of claims 8 to 13, wherein energy strength of the first reference signal on the first port group is lower than energy strength of the first reference signal on the second port group.

15. The method according to any one of claims 8 to 14, wherein the first reference signal is a channel state information-reference signal CSI-RS, and the second reference signal is a sounding reference signal SRS.

16. A channel information obtaining method, wherein the method comprises:
receiving a first reference signal from a network device on a first port group and a second port group; and
sending indication information to the network device, wherein the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, and the second channel information is obtained based on a second reference signal.

17. The method according to claim 16, wherein the first channel information is obtained by normalizing and quantizing third channel information based on reference channel information, the third channel information is obtained based on the first reference signal, and the third channel information is associated with the first port group.

18. The method according to claim 17, wherein the channel combining information is obtained based on fourth channel information and the reference channel information, and the fourth channel information is obtained by measuring the first reference signal on a first port in the second port group.

19. The method according to claim 18, wherein the first port is a port with strongest signal strength in the second port group, or a port predefined in a protocol, or a port configured by the network device, or a port indicated by a terminal device.

20. The method according to claim 18 or 19, wherein the channel combining information comprises amplitude information and phase information, and the amplitude information and the phase information is obtained based on the fourth channel information and the reference channel information.

21. The method according to any one of claims 16 to 20, wherein energy strength of the first reference signal on the first port group is lower than energy strength of the first reference signal on the second port group.

22. The method according to any one of claims 16 to 21, wherein the first reference signal is a channel state information-reference signal CSI-RS, and the second reference signal is a sounding reference signal SRS.

23. A channel information obtaining method, wherein the method comprises:
sending a first reference signal to a first port group and a second port group of a terminal device;
receiving indication information from the terminal device, wherein the indication information indicates first channel information and channel combining information that are obtained based on the first reference signal, the first channel information is associated with the first port group, the channel combining information is associated with the first port group and the second port group, the channel combining information is used for combining second channel information and the first channel information, the second channel information is associated with the second port group, the second channel information is obtained based on a second reference signal; and
combining the second channel information and the first channel information based on the channel combining information, to obtain downlink channel information.

24. The method according to claim 23, wherein the first channel information is obtained by normalizing and quantizing third channel information based on reference channel information, the third channel information is obtained based on the first reference signal, and the third channel information is associated with the first port group.

25. The method according to claim 24, wherein the channel combining information is obtained based on fourth channel information and the reference channel information, and the fourth channel information is obtained by measuring the first reference signal on a first port in the second port group.

26. The method according to claim 25, wherein the first port is a port with strongest signal strength in the second port group, or a port predefined in a protocol, or a port configured by a network device, or a port indicated by the terminal device.

27. The method according to claim 25 or 26, wherein the channel combining information comprises amplitude information and phase information, and the amplitude information and the phase information is obtained based on the fourth channel information and the reference channel information.

28. The method according to any one of claims 25 to 27, wherein the combining the second channel information and the first channel information based on the channel combining information, to obtain the downlink channel information comprises:
performing normalization processing on the second channel information based on channel information that corresponds to the first port in the second port group and that is in the second channel information, to obtain sixth channel information;
processing the sixth channel information based on the channel combining information, to obtain seventh channel information; and
combining the first channel information and the seventh channel information, to obtain the downlink channel information.

29. The method according to any one of claims 23 to 28, wherein energy strength of the first reference signal on the first port group is lower than energy strength of the first reference signal on the second port group.

30. The method according to any one of claims 23 to 29, wherein the first reference signal is a channel state information-reference signal CSI-RS, and the second reference signal is a sounding reference signal SRS.

31. A channel information obtaining apparatus, comprising a unit configured to implement the method according to any one of claims 1 to 7, or comprising a unit configured to implement the method according to any one of claims 8 to 15, or comprising a unit configured to implement the method according to any one of claims 16 to 22, or comprising a unit configured to implement the method according to any one of claims 23 to 30.

32. A communication system, wherein the system comprises a first communication apparatus and a second communication apparatus, the first communication apparatus is configured to implement the method according to any one of claims 1 to 7, and the second communication apparatus is configured to implement the method according to any one of claims 8 to 15.

33. A communication system, wherein the system comprises a first communication apparatus and a second communication apparatus, the first communication apparatus is configured to implement the method according to any one of claims 16 to 22, and the second communication apparatus is configured to implement the method according to any one of claims 23 to 30.

34. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 7, or implement the method according to any one of claims 8 to 15, or implement the method according to any one of claims 16 to 22, or implement the method according to any one of claims 23 to 30 through a logic circuit or by executing code instructions.

35. The communication apparatus according to claim 34, wherein the communication apparatus is a chip.

36. A chip module, comprising a transceiver component and a chip, wherein the chip is configured to perform the method according to any one of claims 1 to 7, or perform the method according to any one of claims 8 to 15, or perform the method according to any one of claims 16 to 22, or perform the method according to any one of claims 23 to 30.

37. A computer-readable storage medium, wherein the computer-readable storage medium stores a computer program, and when the program is executed by a processor, the method according to any one of claims 1 to 7 is implemented, or the method according to any one of claims 8 to 15 is implemented, or the method according to any one of claims 16 to 22 is implemented, or the method according to any one of claims 23 to 30 is implemented.

38. A computer program product, wherein the computer program product comprises related program instructions, and when the related program instructions are executed, the method according to any one of claims 1 to 30 is implemented.
